# EUROPÄISCHE PATENTANMELDUNG

(11) **EP 1 222 863 A1**
(43) Veröffentlichungstag der Anmeldung: **17.07.2002**
(21) Anmeldenummer: 00811259.1
(22) Anmeldetag: 29.12.2000
(51) Int. Cl.: A23L 1/302, A23L 1/303, A61K 35/78

(54) **Viatmin angereicherte Lebensmittel**

(71) Anmelder: EnergyBalance AG, 9491 Ruggell (LI)
(72) Erfinder:

(57) **Zusammenfassung**

Medizinische Untersuchungen haben gezeigt, dass die metabolische Aufnahme von isolierten Vitaminen schlechter ist, als diejenige von Vitaminen, die natürlich in Lebensmittel enthalten sind. Deshalb wird zum Beispiel bei Vitamin C, in Form von Ascorbinsäure, die Aufnahme durch zeitverzögerte Abgabe im Verdauungstrakt verbessert.

Zum Beispiel bei den Mineralstoffen und Spurenelementen, gibt es bereits Hefeverbindungen, welche die Aufnahme erhöhen.

Um die artgerechte und therapeutische Versorgung mit Vitaminen zu gewährleisten, werden hier die Vitaminprodukte aus Lebensmittelsubstanzen mit standardisiertem Vitamingehalt hergestellt. Die speziell hergestellte Lebensmittelsubstanz mit standardisiertem und geringem Gewicht enthält immer die gleiche Menge Vitamin. Das Vitamin ist in der Lebensmittelsubstanz so gebunden, wie in einem natürlichem Lebensmittel. Das Vitamin in der Lebensmittelsubstanz kann nun immer genau dosiert werden und erhöht somit die therapeutische Versorgung.

## Beschreibung

Medizinische Untersuchungen haben gezeigt, dass die metabolische Aufnahme von isolierten Vitaminen schlechter ist, als diejenige von Vitaminen, die natürlich in Lebensmittel enthalten sind. Deshalb wird zum Beispiel bei Vitamin C, in Form von Ascorbinsäure, die Aufnahme durch zeitverzögerte Abgabe im Verdauungstrakt verbessert.

Zum Beispiel bei den Mineralstoffen und Spurenelementen, gibt es bereits Hefeverbindungen, welche die Aufnahme erhöhen.

Um die artgerechte und therapeutische Versorgung mit Vitaminen zu gewährleisten, werden hier die Vitaminprodukte aus Lebensmittelsubstanzen mit standardisiertem Vitamingehalt hergestellt. Die speziell hergestellte Lebensmittelsubstanz mit standardisiertem und geringem Gewicht enthält immer die gleiche Menge Vitamin. Das Vitamin ist in der Lebensmittelsubstanz so gebunden, wie in einem natürlichem Lebensmittel. Das Vitamin in der Lebensmittelsubstanz kann nun immer genau dosiert werden und erhöht somit die therapeutische Versorgung.

## Patentansprüche

1. Vitamin angereicherte Lebensmittel, Genussmittel, Getränke und Novel Foods, Vitamin enthaltende medizinische, therapeutische, präventive und nahrungsergänzende Produkte in jeder Form, ausgenommen Produkte mit Omega-3 Fettsäuren, für Mensch und Tier,
**dadurch gekennzeichnet,**
**dass** das Vitamin in einer speziell hergestellten Lebensmittelsubstanz mit
standardisiertem Gewicht, mit konstanter Menge an dem Vitamin und in gleicher Form in dieser Lebensmittelsubstanz gebunden ist, wie Vitamine in natürlichen Lebensmittel.
